# EUROPÄISCHE PATENTSCHRIFT

(11) **EP 2 492 630 B1**
(45) Veröffentlichungstag und Bekanntmachung des Hinweises auf die Patenterteilung: **31.05.2017**
(21) Anmeldenummer: 12000631.7
(22) Anmeldetag: 01.02.2012
(51) Int. Cl.: G01B 5/28, G01B 5/00

(54) **Vorrichtung zum Vermessen der Form einer Stange**
Device for assessing the shape of a rod
Dispositif de mesure de la forme d'une tige

(30) Priorität: 23.02.2011 DE 102011011996
(43) Veröffentlichungstag der Anmeldung: 29.08.2012
(73) Patentinhaber: Diehl Metall Stiftung & Co. KG, 90552 Röthenbach (DE)
(72) Erfinder: Termöllen, Frank, 91233 Neunkirchen a. Sand (DE); Brich, Peter, 95126 Schwarzenbach (DE)
(74) Vertreter: Diehl Patentabteilung

(56) Entgegenhaltungen:
- DE-B- 1 186 641
- US-A- 5 048 326

## Beschreibung

Die Erfindung betrifft eine Vorrichtung zum Vermessen der Form einer Stange, insbesondere einer Metallstange.

Nach dem Stand der Technik wird die Geradheit einer, beispielsweise aus Messing hergestellten, Metallstange manuell geprüft. Dazu wird die Metallstange in zwei voneinander beabstandete achsparallel angeordnete Rollenpaare eingelegt und von Hand langsam gedreht. Die Geradheit wird für eine definierte Position aus gemessenen Abstandswerten zwischen Metallstange und einer Messuhr ermittelt.

Das bekannte Verfahren ist relativ zeitaufwändig, damit kostenträchtig, und erfordert geschultes Personal.

Aus der US 5,048326 A ist eine Vorrichtung zur Messung der Oberflächenrauheit eines zylinderförmigen Gegenstands bekannt. Die Vorrichtung ist so ausgebildet, dass der Gegenstand durch zwei parallele Drehwalzen gedreht, und dabei die Oberflächenrauheit gemessen werden kann.

Aus der DE 1 186 641 A ist eine Vorrichtung zum Kontrollieren der Geradheit von Stäben bekannt. Die Vorrichtung weist Abrollstege mit daran angebrachten kippbaren Abrollstegen auf, auf denen die Stäbe bei Messung der Geradheit abrollen. Die kippbaren Abrollstege führen bei Abweichungen von der Geradheit eines Stabs eine kippende Bewegung aus. Die kippende Bewegung wird auf eine fest installierte Messvorrichtung übertragen, die aus der den Kippbewegungen die Abweichung von der Geradheit des Stabs ermittelt.

Aufgabe der Erfindung ist es, die Nachteile nach dem Stand der Technik zu beseitigen. Es soll insbesondere eine Vorrichtung und ein Verfahren angegeben werden, mit der schnell und einfach die Form, insbesondere die Geradheit, einer Stange ermittelbar ist.

Diese Aufgabe wird durch die Merkmale der Ansprüche 1 und 18 gelöst. Zweckmäßige Ausgestaltungen der Erfindung ergeben sich aus den Merkmalen der jeweils abhängigen Ansprüche.

Nach Anspruch 1 ist eine Vorrichtung zum Vermessen der Form von Stangen mit kreisförmigem Querschnitt vorgesehen. Unter Vermessen der Form soll dabei insbesondere verstanden werden, dass Formabweichungen und/oder Formübereinstimmungen der Form der Stange mit einer vorgegebenen Referenzform, ggf. unter Zulassung geeigneter Toleranzen, ermittelt und ggf. berechnet werden. Die Form der Stange kann beispielsweise deren Geradheit betreffen.

Die Vorrichtung umfasst zumindest zwei, vorzugsweise fest angebrachte, Abrollstege, welche derart ausgebildet und angeordnet sind, dass eine darauf aufliegende, quer zur Längsrichtung der Abrollstege ausgerichtete Stange entlang der Abrollstege abrollbar ist. Unter Abrollen soll hier insbesondere verstanden werden, dass die Stange mit ihrer Mantelfläche auf den Abrollstegen, oder ggf. davon umfassten Abrollkanten, abrollt.

Im Hinblick auf den relativen Verlauf und die relative Anordnung der Abrollstege ist es möglich, dass diese, vorzugsweise in einer gemeinsamen Ebene liegend, parallel zueinander angeordnet sind. Ebenfalls ist es möglich, dass die Abrollstege, vorzugsweise in einer gemeinsamen Ebene, auseinander bzw. zusammenlaufend angeordnet sind. Bei einer in Abrollrichtung auseinander laufenden Anordnung der Abrollstege ist es durch den sich kontinuierlich vergrößernden Abstand zwischen den Abrollstegen beispielsweise möglich, eine Längensortierung der Stangen in Rahmen der Vermessung, insbesondere Geradheitsprüfung, vorzunehmen. Die Abrollstege können in der gemeinsamen Ebene geradlinig oder auch gekrümmt verlaufen. Eine Längensortierung ist jedoch auch bei parallel zueinander ausgerichteten Abrollstegen möglich, indem die Abrollstege, vorzugsweise nach einer Mindestabrollstrecke, quer zur Abrollrichtung einen Versatz aufweisen, durch welchen der Abstand zwischen den Abrollstegen stufenweise vergrößert wird. Ein stufenweises vergrößern des Abstands ist beispielsweise möglich mit mehreren in Reihe geschalteten Abrollstegsegmenten mit sich vergrößerndem gegenseitigem Abstand quer zur Abrollrichtung. An dieser Stelle soll bemerkt werden, dass es sich quasi von selbst versteht, dass ein Abrollen auf bzw. entlang der Abrollstege und Abrollkanten nur so lange möglich ist, solange die jeweilige Stange auf zumindest zwei Abrollstegen aufliegt. Insoweit sollten die jeweiligen Abstände zwischen zwei benachbarten Abrollstegen bzw. Abrollkanten in zumindest im Vermessungsbereich kleiner sein als die Länge der Stangen.

Bevorzugter Weise weist jeder Abrollsteg zumindest eine, vorzugsweise gerade ausgebildete, Abrollkante auf, auf und entlang welcher die Stange bei der Abrollbewegung, vorzugsweise schlupffrei, abrollt, bzw. abrollen kann. Mit Abrollkanten kann das Abrollverhalten verbessert werden.

Die Anzahl und Abstände zwischen den Abrollstegen bzw. Abrollkanten sind vorzugsweise derart gewählt, dass bei der Abrollbewegung keine bzw. im Wesentlichen keine Verfälschungen der tatsächlichen Form, insbesondere Geradheit, der jeweiligen Stange, beispielsweise zusätzliche Durchbiegungen der Stange usw., insbesondere in Bereichen zwischen benachbarten Abrollstegen bzw. Abrollkanten, auftreten. In einer Variante kann vorgesehen sein, dass die Abstände zwischen den Abrollstegen, bzw. Abrollkanten, vorzugsweise kontinuierlich, verstellt werden können. Dabei kann, beispielsweise mittels einer entsprechenden Verschiebeeinrichtung, vorgesehen sein, dass die Verstellung der Abstände zwischen benachbarten Abrollstegen bzw. Abrollkanten automatisch erfolgen kann.

Die Vorrichtung umfasst neben den Abrollstegen des Weiteren eine Führungseinrichtung ausgebildet zum Führen der Stange, derart, dass beim Vermessen der Form die Stange in vorgegebener Weise, insbesondere Ausrichtung, auf den Abrollstegen bzw. Abrollkanten in deren Längsrichtung über eine vorgegebene Messstrecke rollt. Vorzugsweise ist die Führungseinrichtung derart ausgebildet, dass die Stange gleichmäßig über beide Abrollstege bzw. Abrollkanten gerollt wird. Bei paralleler Ausrichtung der Abrollstege und Abrollkanten werden die Stangen vorteilhafter Weise derart geführt, dass der Winkel zwischen Längsachse der Stangen und den Längsachsen der Abrollstege gleich bleibt. Insbesondere können in diesem Fall die Stangen derart abgerollt werden, dass die Längsrichtung der Stangen etwa senkrecht zur Längsrichtung der Abrollstege verläuft.

Die Abrollstege bzw. die Abrollkanten können gegen die Waagerechten jeweils um einen vorgegebenen Neigungswinkel geneigt sein. In diesen Fällen ist es insbesondere möglich, dass die die Stange auf den Abrollstegen bzw. Abrollkanten in oder entgegen der Richtung der Abtriebskraft abgerollt wird. Im ersten Fall, kann eine Stange z. B. durch die Führungseinrichtung gehalten und kontrolliert in Richtung der Abtriebskraft gerollt werden. Im zweiten Fall kann eine Stange z. B. durch Einwirken der Führungseinrichtung auf die Stange entgegen der Abtriebskraft kontrolliert gerollt werden. Ebenfalls möglich ist es, die Abrollstege bzw. Abrollkanten waagrecht auszurichten, wobei auch hier wie beim zweiten Fall eine Förderung der Stange durch die Führungseinrichtung erforderlich sein wird. In einer Variante kann, z. B. mittels einer Verstelleinrichtung, vorgesehen sein, dass die Neigungswinkel zumindest in einem vorgegebenen Winkelbereich, vorzugsweise kontinuierlich, verändert werden können.

Durch die Möglichkeit bzw. die Möglichkeiten Veränderung des Neigungswinkels und/oder der Abstände zwischen Abrollstegen bzw. Abrollkanten kann die Vorrichtung in einfacher Weise unterschiedlichen Erfordernissen angepasst werden. Beispielsweise kann es sein, dass Stangen mit großem Durchmesser und/oder vergleichsweise hohem Gewicht kleinere Neigungswinkel erfordern als Stangen mit kleinerem Durchmesser und/oder Gewicht.

Die Vorrichtung umfasst des Weiteren zumindest eine mit der Führungseinrichtung gemeinsam entlang der Messstrecke bewegbare Messeinrichtung. Die Messeinrichtung kann beispielsweise mechanisch an die Führungseinrichtung gekoppelt sein, oder es können weitere Führungsmittel vorhanden sein, mit welchen die Messeinrichtung synchron mit der Führungseinrichtung bewegt werden kann.

Die Messeinrichtung ist eingerichtet und ausgebildet zum Vermessen der Form einer Stange während des Abrollens der Stange auf den Abrollstegen, bzw. Abrollkanten. Die Vermessung der Form kann auf einen oder mehrere Messwerte gestützt werden. Als ein Messwert kann - ohne Beschränkung der Allgemeinheit - beispielsweise der radiale Abstand zwischen der Stange, genauer zwischen Mantelfläche der Stange, und der Messeinrichtung herangezogen werden. Auf Grundlage der so vermessenen Form können z. B. Formabweichung, Geradheit usw. ermittelt werden. Anhand der vermessenen Form können die Stangen in ihrer Qualität geprüft, und ggf. klassifiziert werden.

Die vorgeschlagene Vorrichtung ermöglicht eine schnelle und einfache Vermessung der Form einer Stange. Sie ermöglicht insbesondere eine kontinuierliche automatisierte Messung, insbesondere im laufenden Fertigungsprozess der Stangen. Aus diesem Grund ist es auch möglich im Wesentlichen jede Stange im Fertigungsprozess in ihrer Form zu vermessen, im Gegensatz zum Stand der Technik bei welchem lediglich eine stichprobenhafte Untersuchung möglich war.

Bei der bevorzugten Ausgestaltung, bei welcher die Abrollstege geneigt sind, und die Stangen in Richtung der Abtriebskraft geführt werden rollt die Stange unter bremsender Einwirkung der Führungseinrichtung quasi von selbst schwerkraftgetrieben entlang einer Messstrecke. Durch die Führungseinrichtung kann auch sichergestellt werden, dass die Längsachse der Stange die jeweils gewünschte Ausrichtung wie z. B. etwa senkrecht zur Ausrichtung der Abrollstege, einhalten. Zum Bewegen der Stange entlang der Messstrecke ist also vorteilhafterweise kein zusätzlicher Antrieb erforderlich.

In einer Ausgestaltung erstreckt sich eine zur Vermessung der Form vorgesehene bzw. erforderliche Messstrecke lediglich über einen Teilabschnitt der Abrollstege. In diesem Fall erstrecken sich die Abrollstege über die Messstrecke hinaus, wobei der sich über die Messstrecke hinaus erstreckende Abschnitt mit dem gleichen, einem anderen oder sich veränderndem Neigungswinkel geneigt sein kann. Dabei kann bei geeignetem Neigungswinkel die Stange nach Verlassen der Messstrecke z. B: der Schwerkraft folgend weiter auf den Abrollstegen rollen. Die Stangen können so ohne zusätzliche Transporteinrichtung von der Messstrecke weggeführt werden.

Nach einer vorteilhaften Ausgestaltung der Erfindung ist eine erste Bewegungseinrichtung zum Hin- und Herbewegen der Führungseinrichtung in einer Richtung parallel zu einer durch die Abrollstege bzw. Abrollkanten gebildeten Rollebene vorgesehen. Bei der ersten Bewegungseinrichtung kann es sich um eine elektrisch, pneumatisch oder hydraulisch betriebene Bewegungseinrichtung handeln. Indem damit die Führungseinrichtung hin- und herbewegbar ist, kann der Messvorgang sequentiell wiederholend für aufeinanderfolgende Stangen durchgeführt werden. Die vorgeschlagene Vorrichtung eignet sich daher insbesondere zur Einbindung in den Produktionsprozess der Stangen, so dass - im Unterschied zum Stand der Technik - im Wesentlichen alle produzierten Stangen und nicht nur Stichproben vermessen werden können.

Die Bewegungseinrichtung kann zusätzlich auch derart ausgebildet sein, dass diese eine Bewegung der Führungs- und Messeinrichtung quer zu den Abrollstegen bzw. Abrollkanten ermöglicht. Mit einer solchen Konfiguration kann die Vorrichtung flexibel an unterschiedliche Längen der Stangen angepasst werden. Fernern können die jeweiligen Messorte und Messpositionen nach Bedarf und Erfordernissen, insbesondere im laufenden Betrieb der Vorrichtung, eingestellt werden. Möglich ist es auch, dass die Führungs- und Messeinrichtung bei der Vermessung einer Stange sowohl in als auch quer zur Richtung der Abrollstege bzw. Abrollkanten bewegt wird. In diesen Fällen können die Stangen noch genauer Vermessen werden.

Die Führungseinrichtung und die Messeinrichtung sind zweckmäßigerweise auf einem parallel zur Rollebene bewegbaren Schlitten aufgenommen. Der Schlitten ist zweckmäßigerweise auf Kufen geführt, welche an den Abrollstegen angebracht sein können. Das ermöglicht eine kompakte Ausgestaltung der Vorrichtung. Bei Vorsehen eines weiteren Freiheitsgrads zur Bewegung der Führungs- und Messeinrichtung kann die Möglichkeit zur Bewegung quer zur Richtung der Abrollstege bzw. Abrollkanten in ähnlicher Weise umgesetzt sein.

Nach einer weiteren Ausgestaltung der Erfindung ist vorgesehen, dass die Führungseinrichtung an jedem der Abrollstege jeweils ein sich abschnittsweise über die Rollebene erstreckendes Abrollrad aufweist. Das Abrollrad kann frei drehbar sein. Es kann aber auch eine Antriebseinrichtung zum Antreiben des Abrollrads vorgesehen sein. Die Stange liegt beim Abrollen auf der Messstrecke an den Abrollrädern an. Sie wird mit den Abrollrädern geführt, so dass beispielsweise die Achse der Stange etwa senkrecht zur Richtung der Abrollstege gehalten werden kann. Insbesondere durch das Vorsehen angetriebener Abrollräder kann sichergestellt werden, dass die Stange entlang der gesamten Messstrecke in Kontakt mit den Abrollkanten ist. Damit wird eine besonders genaue Messung der Geradheit der Stange ermöglicht.

Die Führungseinrichtung kann aber auch andersartig ausgestaltet sein. Beispielsweise kann die Stange mittels zweier U-förmiger Gabeln geführt werden, welche aus einem Kunststoff mit einem geringen Reibungskoeffizienten, beispielsweise Teflon, hergestellt sind.

Nach einer weiteren vorteilhaften Ausgestaltung der Erfindung ist eine zweite Bewegungseinrichtung zum Bewegen des Abrollrads relativ zur Rollebene vorgesehen. Bei der zweiten Bewegungseinrichtung kann es sich um eine elektrisch, hydraulisch oder pneumatisch betriebene Bewegungseinrichtung handeln. Mit der zweiten Bewegungseinrichtung ist es möglich, das Abrollrad bezüglich der Rollebene anzuheben oder abzusenken. Insbesondere kann damit das Abrollrad unter die Rollebene abgesenkt werden, so dass die Stange freigegeben wird. Bei entsprechender Ausgestaltung und Anordnung der Abrollstege bzw. Abrollkanten kann die Stange der Neigung der Abrollstege folgend wegrollen. In gewissem Rahmen kann somit auf zusätzliche Transporteinrichtungen zum Abtransport der Stangen verzichtet werden.

Nach Freigabe einer Stange kann das Abrollrad mittels der ersten Bewegungseinrichtung zu einem Anfang der Messstrecke bewegt und mittels der zweiten Bewegungseinrichtung wieder bezüglich der Rollebene angehoben werden, so dass es sich über die Rollebene erstreckt. In dieser Position kann eine nächste zu vermessende Stange angelegt werden. Sofern mehrere Einheiten aus Führungs- und Messeinrichtung vorgesehen sind, können bei geeigneter Anordnung auf der Messstrecke beispielsweise gleichzeitig mehrere aufeinander folgende Stangen vermessen werden. Jedenfalls kann mit mehreren Einheiten die Zeitdauer zwischen der Zuführung aufeinander folgender Stangen deutlich verringert werden. Damit kann die Anzahl der pro Zeiteinheit vermessbaren Stangen, ohne die Genauigkeit der Vermessung maßgeblich zu beeinträchtigen, deutlich erhöht werden.

Vorteilhafterweise ist eine Steuerung zum Steuern der ersten und der zweiten Bewegungseinrichtung vorgesehen, derart, dass die Stange entlang einer vorgegebenen Messstrecke auf den Abrollstegen bzw. Abrollkanten geführt und nachfolgend freigegeben wird.

Die Messeinrichtung kann beispielsweise eine tastende und/oder eine kontakt- bzw. berührungslose Abstandsmesseinrichtung umfassen, mit welcher ein Abstand zur Stange ermittelt werden kann. Aus dem Abstand kann dann beispielsweise eine die Geradheit der Stange beschreibende oder charakterisierende Größe ermittelt oder berechnet werden. In Frage kommen als Messeinrichtungen insbesondere digitale Messuhren, optische Abstandsmesseinrichtungen, Laserabstandsmesseinrichtungen und andere. Mit der Messeinrichtung ist der Abstand zwischen der Stange und der Messeinrichtung während des Führens entlang der Messstrecke vorteilhafterweise wiederholend messbar. Die Anzahl der pro Umdrehung gemessenen Abstandswerte kann im Wesentlichen beliebig gesetzt werden.

Nach einer weiteren Ausgestaltung der Erfindung ist eine Datenverarbeitungseinrichtung zum Aufzeichnen und/oder Auswerten von mit der Messeinrichtung gemessenen Messwerten vorgesehen. Die Datenverarbeitungseinrichtung kann gleichzeitig auch als Steuerung zum Steuern der ersten und zweiten Bewegungseinrichtung dienen. Das Vorsehen der Datenverarbeitungseinrichtung ermöglicht eine automatisierte Dokumentation und/oder Auswertung der Messwerte. Abgesehen davon kann damit eine stromabwärts der Vorrichtung vorgesehene Sortiereinrichtung zum Sortieren der Stangen in Abhängigkeit der gemessenen Werte angesteuert werden.

Nach Patentanspruch 15 ist ein Verfahren zur Vermessung der Form einer Stange vorgesehen. Das Verfahren umfasst insbesondere die folgenden Schritte:
- Abrollen der Stange auf zumindest zwei, vorzugsweise fest angebrachten, Abrollstegen, wobei die Stange quer zur Längsrichtung der Abrollstege ausgerichtet ist und wird;
- Führen der Stange entlang der Abrollstege in der vorgegebenen Ausrichtung in rollender Bewegung entlang der Abrollstege über eine vorgegebene Messstrecke; und
- Vermessen der Form der Stange während der Bewegung der Stange entlang der Messstrecke.

Das Verfahren kann insbesondere mit der hier vorgeschlagenen Vorrichtung oder einer Ausgestaltung derselben durchgeführt werden. Insoweit können aus Merkmalen der Vorrichtung oder Ausgestaltungen derselben sich ergebende Verfahrensmerkmale unmittelbar auf das Verfahren oder Ausgestaltungen desselben übertragen werden. Hinsichtlich Vorteilen und vorteilhaften Wirkungen wird auf die Ausführungen zur Vorrichtung und deren Ausgestaltungen verwiesen.

Nachfolgend wird ein Ausführungsbeispiel der Erfindung anhand der Zeichnungen näher erläutert. Es zeigen:

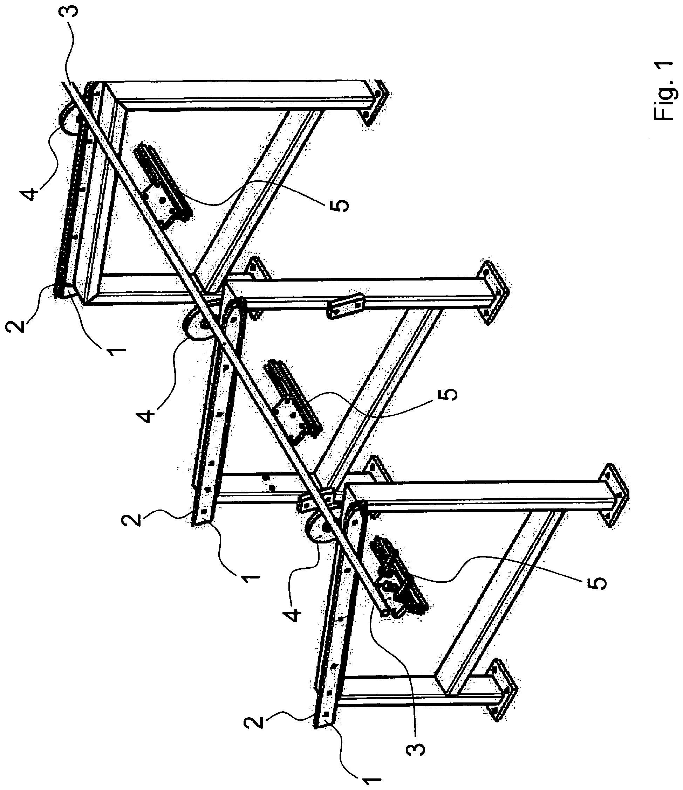

- Fig. 1: eine perspektivische Teilansicht einer Vorrichtung und
- Fig. 2: eine Seitenansicht gemäß Fig. 1.

In den Figuren sind drei Abrollstege 1 mit daran vorgesehenen geraden Abrollkanten 2 parallel zueinander angeordnet. Die geraden Abrollkanten 2 weisen gegenüber einer Horizontalebene H einen Neigungswinkel von 15 bis 45°, vorzugsweise 20 bis 30°, besonders bevorzugt 21 bis 24°, auf. Mit dem Bezugszeichen 3 ist eine, beispielsweise aus Messing hergestellte, Metallstange bezeichnet, welche auf den Abrollkanten 2 aufliegt. Eine Längsachse der Stange 3 verläuft dabei etwa senkrecht zur Richtung der Abrollkanten 2.

Jedem der Abrollstege 1 ist ein Abrollrad 4 zugeordnet. Ferner ist jedem der Abrollstege 1 eine Messeinrichtung 5 zugeordnet. Die Abrollräder 4 und die Messeinrichtungen 5 sind zweckmäßigerweise auf einem (hier nicht gezeigten) Schlitten angeordnet, welcher parallel zu einer durch die Abrollkanten 2 gebildeten Rollebene R mittels einer (hier nicht gezeigten) ersten Bewegungseinrichtung hin- und herbewegbar ist. Ein Abstand zwischen der Messeinrichtung 5 und der Stange 3 ist mit dem Bezugszeichen a bezeichnet. Eine Messstrecke auf den Abrollkanten 2 ist mit dem Bezugszeichen b bezeichnet.

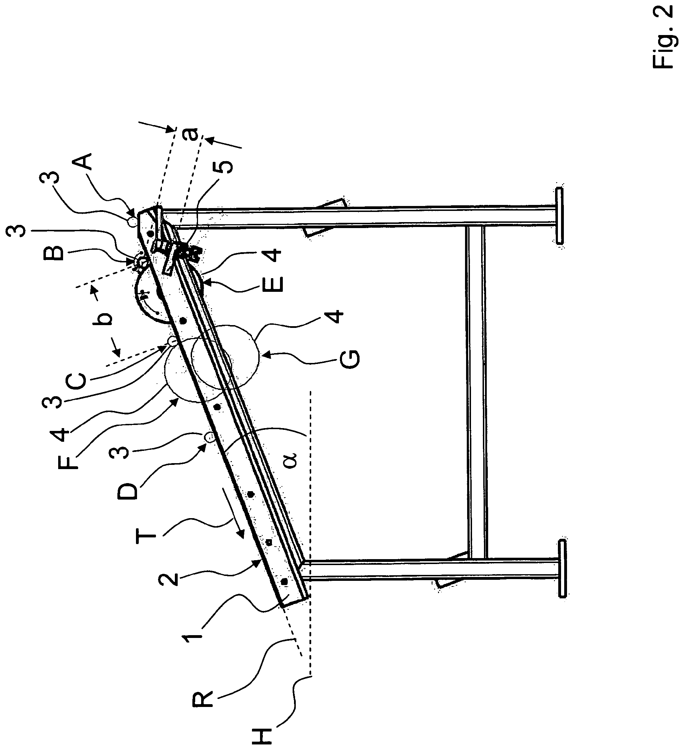

Die Funktion der Vorrichtung wird nunmehr insbesondere anhand der Fig. 2 näher erläutert.

Eine zu vermessende Metallstange wird bei der Position A der Vorrichtung zugeführt. Sie rollt dann der Schwerkraft folgend auf den Abrollkanten 2 in die Position B, wo sie an dem sich über die Rollebene R erstreckenden Abrollrad 4, welches sich in der Position E befindet, anliegt. Das Abrollrad 4 wird sodann parallel zur Rollebene R in die Position F bewegt. Gleichzeitig wird das Abrollrad 4 mittels einer Antriebseinrichtung gedreht. Eine Drehgeschwindigkeit ist so gewählt, dass die Stange 3 auf den Abrollkanten 2 rollt, ohne den Kontakt zu den Abrollkanten 2 zu verlieren oder bezüglich der Abrollkanten 2 durchzurutschen. D. h. die Stange 3 wird rollend entlang der Messstrecke b mittels der Abrollräder 4 geführt. Zusammen mit zumindest zwei der Abrollräder 4 wird jeweils eine Messeinrichtung 5 synchron entlang der Messstrecke b geführt. Mit den Messeinrichtungen 5 wird kontinuierlich der Abstand a gemessen. Die dabei gewonnenen Messwerte werden an eine Datenverarbeitungseinrichtung übermittelt, dort aufgezeichnet und/oder ausgewertet.

In der Position F wird das Abrollrad 4 sodann mittels einer (hier nicht gezeigten) zweiten Bewegungseinrichtung auf ein Niveau unterhalb der Rollebene R in die Position G abgesenkt. Infolgedessen rollt die Stange 3 von der Position C der Schwerkraft folgend in die Position D und weiter in die durch den Pfeil T bezeichnete Transportrichtung.

Das Abrollrad 4 wird mittels der ersten und der zweiten Bewegungseinrichtung von der Position G zurück in die Position E bewegt. Nachfolgend kann die Messung in gleicher Weise mit einer weiteren Stange 3 wiederholt werden.

Bei der gezeigten Vorrichtung handelt es sich damit um eine Vorrichtung zum Messen der Geradheit der Stange 3 mit kreisförmigem Querschnitt, mit zumindest zwei parallel zueinander angeordneten Abrollstegen 1, wobei jeder der Abrollstege 1 eine gerade Abrollkante 2 aufweist, welche bezüglich einer Horizontalen H jeweils mit einem vorgegebenen Neigungswinkel α geneigt sind, wobei ein Stegabstand zwischen den Abrollstegen 1 kleiner als eine Länge der Stange 3 ist, so dass die Stange 3 auf den Abrollkanten 2 beider Abrollstege 1 gleichzeitig aufsetz- und darauf der Schwerkraft folgend abrollbar ist.

Ferner umfasst die Vorrichtung eine Führungseinrichtung zum Führen der Stange 3, so dass eine Achse der auf den Abrollkanten 2 rollenden Stange 3 etwa senkrecht zur Ausrichtung der Abrollstege 1 verläuft.

Des Weiteren umfasst die Vorrichtung zumindest eine gemeinsam mit der Führungseinrichtung bewegbare Messeinrichtung 5 zum Messen eines Abstands a zwischen der Stange 3 und der Messeinrichtung 5.

Die vorgeschlagene Vorrichtung ermöglicht eine einfache, schnelle und automatisierte Vermessung von Stangen 3, insbesondere eine eine einfache, schnelle und automatisierte Bestimmung der Geradheit von Stangen 3.

Obgleich die Vorrichtung und das Verfahren hier anhand der Bestimmung der Geradheit von Metallstangen beschrieben worden ist, kann diese auch so ausgestaltet sein, dass damit die Geradheit von Stangen aus anderen Materialien bestimmt werden kann. In diesem Fall kann es erforderlich sein, eine andere Messeinrichtung, andere Neigungswinkel, ggf. eine andere Anzahl an Abrollstegen, Messeinrichtungen und ggf. angepasste Abstände zwischen den Abrollstegen 1zu verwenden. Dabei kann es sich beliebige, geeignete Messeinrichtungen, seien sie tastend oder kontaktlos, handeln. In Frage kommen insbesondere auch akustische Messeinrichtungen usw..

### Bezugszeichenliste

- 1: Abrollsteg
- 2: Abrollkante
- 3: Stange
- 4: Abrollrad
- 5: Messeinrichtung

- a: Abstand
- b: Messstrecke
- A, B, C, D: Positionen der Stange
- E, F, G: Postionen des Abrollrads
- H: Horizontalebene
- R: Rollebene
- T: Transportrichtung
- α: Neigungswinkel

## Patentansprüche

1. Vorrichtung zum, zumindest abschnittsweisen, Vermessen der Form einer Stange (3) mit kreisförmigem Querschnitt, mit
zumindest zwei Abrollstegen (1), welche derart ausgebildet und angeordnet sind, dass eine darauf aufliegende, quer zur Längsrichtung der Abrollstege (1) ausgerichtete Stange (3) entlang der Abrollstege (1) abrollbar ist,
zumindest einer Führungseinrichtung (4) ausgebildet zum Führen der Stange (3), derart,
dass beim Vermessen der Form die Stange (3) in vorgegebener Weise, insbesondere gemäß der vorgegebenen Ausrichtung, auf den Abrollstegen (1) in deren Längsrichtung über eine vorgegebene Messstrecke (b) abrollbar ist und zumindest einer, jeweils gemeinsam mit einer der zumindest einen Führungseinrichtung entlang der Messstrecke (b) bewegbaren Messeinrichtung (5) zum Vermessen der Form der Stange (3).

2. Vorrichtung nach Anspruch 1, wobei die Abrollstege (1) parallel zueinander angeordnet sind.

3. Vorrichtung nach einem der vorangehenden Ansprüche, wobei die Abrollstege fest angebracht sind.

4. Vorrichtung nach einem der vorhergehenden Ansprüche, wobei jeder Abrollsteg (1) eine Abrollkante (2) umfasst, und wobei die Abrollkanten (2) vorzugsweise bezüglich einer Horizontalen (H) jeweils mit einem vorgegebenen Neigungswinkel (α) geneigt sind, so dass die Stange (3) auf den Abrollkanten (2) beider Abrollstege (1) der Schwerkraft folgend abrollbar ist.

5. Vorrichtung nach Anspruch 4, wobei die Abrollkante gerade ist.

6. Vorrichtung nach einem der vorhergehenden Ansprüche, wobei die Führungseinrichtung derart ausgebildet ist, dass eine Längsachse einer auf den Abrollkanten (2) rollenden Stange (3) etwa senkrecht zur Ausrichtung der Abrollstege (1) verläuft.

7. Vorrichtung nach einem der vorhergehenden Ansprüche, wobei die Messeinrichtung ausgebildet ist zum Messen eines Abstands (a) zwischen der Stange (3) und der Messeinrichtung (5)

8. Vorrichtung nach einem der vorhergehenden Ansprüche, umfassend des Weiteren eine erste Bewegungseinrichtung zum Hin- und Herbewegen der Führungseinrichtung in einer Richtung parallel zu einer durch die Abrollstege (1) oder Abrollkanten (2) gebildeten Rollebene (R).

9. Vorrichtung nach einem der vorhergehenden Ansprüche, wobei die Führungseinrichtung und die Messeinrichtung (5) auf einem parallel zur Rollebene (R) bewegbaren Schlitten aufgenommen sind.

10. Vorrichtung nach einem der vorhergehenden Ansprüche, wobei die Führungseinrichtung an jedem der Abrollstege (1) jeweils ein sich abschnittsweise über die Rollebene (R) erstreckendes Abrollrad (4) aufweist.

11. Vorrichtung nach einem der vorhergehenden Ansprüche, wobei eine Antriebseinrichtung ausgebildet und eingerichtet ist zum Antreiben des Abrollrads (4).

12. Vorrichtung nach einem der vorhergehenden Ansprüche, umfassend des Weiteren eine zweite Bewegungseinrichtung zum Bewegen des Abrollrads (4) relativ zur Rollebene (R).

13. Vorrichtung nach einem der vorhergehenden Ansprüche, umfassend des Weiteren eine Steuerung zum Steuern der ersten und der zweiten Bewegungseinrichtung, derart, dass die Stange (3) entlang einer vorgegebenen Messstrecke (b) auf den Abrollkanten (2) geführt und nach Durchlaufen der Messstrecke (b) freigegeben wird.

14. Vorrichtung nach einem der vorhergehenden Ansprüche, wobei es sich bei der Messeinrichtung (5) um eine tastende oder berührungslose Messeinrichtung handelt.

15. Vorrichtung nach Anspruch 14, wobei die Messeinrichtung der Kategorie digitale Messuhr, optische und/oder akustische Abstandsmesseinrichtung, Laserabstandsmesseinrichtung ist.

16. Vorrichtung nach einem der vorhergehenden Ansprüche, wobei mit der Messeinrichtung (5) der Abstand (a) zwischen der Stange (3) und der Messeinrichtung (5) während des Führens der Stange (3) entlang der Messstrecke (b) wiederholend messbar ist.

17. Vorrichtung nach einem der vorhergehenden Ansprüche, umfassend des Weiteren eine Datenverarbeitungseinrichtung zum Aufzeichnen und/oder Auswerten von mit der Messeinrichtung (5) gemessenen Messwerten und/oder zur Ermittlung einer die Geradheit der Stange (3) beschreibenden Größe.

18. Verfahren zum, zumindest abschnittsweisen Vermessen der Form einer Stange (3) mit kreisförmigem Querschnitt mit einer Vorrichtung gemäß einem der Ansprüche 1 bis 14, umfassend die Schritte:
- Abrollen der Stange (3) auf zumindest zwei Abrollstegen (1), wobei die Stange (3) quer zur Längsrichtung der Abrollstege (1) ausgerichtet ist und wird;
- Führen der Stange (3) entlang der Abrollstege (1) in der vorgegebenen Ausrichtung in rollender Bewegung entlang der Abrollstege (1) über eine vorgegebene Messstrecke mittels zumindest einer Führungseinrichtung (4); und
- Vermessen der Form der Stange (3) während der Bewegung der Stange (3) entlang der Messstrecke, mit zumindest einer Messeinrichtung (5) zum Vermessen der Form der Stange (3), wobei die zumindest eine Messeinrichtung (5) gemeinsam mit einer der zumindest einen Führungseinrichtung bewegt wird.

## Claims

1. Apparatus for the at least sectional assessment of the shape of a rod (3) having a circular cross section, comprising
at least two roll-over webs (1) which are formed and arranged in such a way that a rod (3) resting thereon and aligned transversely with respect to the longitudinal direction of the roll-over webs (1) can be rolled along the roll-over webs (1),
at least one guide device (4), designed to guide the rod (3) in such a way that, during the assessment of the shape, the rod (3) can be rolled over a predefined measuring section (b) on the roll-over webs (1), in the longitudinal direction thereof, in a predefined manner, in particular in accordance with the predefined alignment,
and at least one measuring device (5), in each case movable along the measuring section (b) jointly with one of the at least one guide device, to assess the shape of the rod (3).

2. Apparatus according to Claim 1, wherein the roll-over webs (1) are arranged parallel to one another.

3. Apparatus according to one of the preceding claims, wherein the roll-over webs are firmly attached.

4. Apparatus according to one of the preceding claims, wherein each roll-over web (1) comprises a roll-over edge (2) and wherein the roll-over edges (2) are preferably each aligned with respect to a horizontal (H) at a predefined angle of inclination (α), so that the rod (3) can be rolled on the roll-over edges (2) of both roll-over webs (1), following the force of gravity.

5. Apparatus according to Claim 4, wherein the roll-over edge is straight.

6. Apparatus according to one of the preceding claims, wherein the guide device is formed in such a way that a longitudinal axis of a rod (3) rolling on the roll-over edges (2) extends approximately at right angles to the alignment of the roll-over webs (1).

7. Apparatus according to one of the preceding claims, wherein the measuring device is designed to measure a distance (a) between the rod (3) and the measuring device (5).

8. Apparatus according to one of the preceding claims, also comprising a first movement device for moving the guide device to and fro in a direction parallel to a rolling plane (R) formed by the roll-over webs (1) or roll-over edges (2).

9. Apparatus according to one of the preceding claims, wherein the guide device and the measuring device (5) are accommodated on a carriage that is movable parallel to the rolling plane (R).

10. Apparatus according to one of the preceding claims, wherein each guide device on each of the roll-over webs (1) has a rolling wheel (4) extending in some sections over the rolling plane (R).

11. Apparatus according to one of the preceding claims, wherein a drive device is formed and configured to drive the rolling wheel (4).

12. Apparatus according to one of the preceding claims, also comprising a second movement device for moving the rolling wheel (4) relative to the rolling plane (R).

13. Apparatus according to one of the preceding claims, also comprising a controller for controlling the first and the second movement device in such a way that the rod (3) is guided along a predefined measuring section (b) on the roll-over edges (2) and is released after passing through the measuring section (b).

14. Apparatus according to one of the preceding claims, wherein the measuring device (5) is a sensing or non-contact measuring device.

15. Apparatus according to Claim 14, wherein the measuring device is of the category digital dial gauge, optical and/or acoustic distance measuring device, laser distance measuring device.

16. Apparatus according to one of the preceding claims, wherein, by using the measuring device (5), the distance (a) between the rod (3) and the measuring device (5) can be measured repeatedly as the rod (3) is guided along the measuring section (b).

17. Apparatus according to one of the preceding claims, also comprising a data-processing device for recording and/or evaluating measured values measured with the measuring device (5), and/or for determining a variable describing the straightness of the rod (3).

18. Method for the at least sectional assessment of the shape of a rod (3) having a circular cross section by using an apparatus according to one of Claims 1 to 14, comprising the steps:
- rolling the rod (3) on at least two roll-over webs (1), wherein the rod (3) is aligned transversely with respect to the longitudinal direction of the roll-over webs (1);
- guiding the rod (3) along the roll-over webs (1) in the predefined alignment in a rolling movement along the roll-over webs (1) over a predefined measuring section by means of at least one guide device (4); and
- assessing the shape of the rod (3) during the movement of the rod (3) along the measuring section, by using at least one measuring device (5) for assessing the shape of the rod (3), wherein the at least one measuring device (5) is moved jointly with one of the at least one guide device.

## Revendications

1. Dispositif de mesure au moins partielle de la forme d'une tige (3) de section transversale circulaire, comprenant
au moins deux nervures de roulement (1) qui sont réalisées et disposées de telle sorte qu'une tige (3) reposant sur celles-ci, orientée transversalement à la direction longitudinale des nervures de roulement (1), puisse rouler le long des nervures de roulement (1),
au moins un dispositif de guidage (4) réalisé pour guider la tige (3) de telle sorte que lors de la mesure de la forme, la tige (3) puisse rouler de manière prédéfinie, en particulier selon l'orientation prédéfinie, sur les nervures de roulement (1) dans leur direction longitudinale sur une section de mesure prédéfinie (b),
et au moins un dispositif de mesure (5) pour mesurer la forme de la tige (3), pouvant être déplacé à chaque fois conjointement avec l'un des au moins un dispositif de guidage le long de la section de mesure (b).

2. Dispositif selon la revendication 1, dans lequel les nervures de roulement (1) sont disposées parallèlement l'une à l'autre.

3. Dispositif selon l'une quelconque des revendications précédentes, dans lequel les nervures de roulement sont montées fixement.

4. Dispositif selon l'une quelconque des revendications précédentes, dans lequel chaque nervure de roulement (1) comprend une arête de roulement (2), et dans lequel les arêtes de roulement (2) sont inclinées de préférence par rapport à une horizontale (H) à chaque fois avec un angle d'inclinaison prédéfini (α) de telle sorte que la tige (3) puisse rouler sur les arêtes de roulement (2) des deux nervures de roulement (1) en suivant la force de gravité.

5. Dispositif selon la revendication 4, dans lequel l'arête de roulement est droite.

6. Dispositif selon l'une quelconque des revendications précédentes, dans lequel le dispositif de guidage est réalisé de telle sorte qu'un axe longitudinal d'une tige (3) roulant sur les arêtes de roulement (2) s'étende approximativement perpendiculairement à l'orientation des nervures de roulement (1).

7. Dispositif selon l'une quelconque des revendications précédentes, dans lequel le dispositif de mesure est réalisé pour mesurer une distance (a) entre la tige (3) et le dispositif de mesure (5).

8. Dispositif selon l'une quelconque des revendications précédentes, comprenant en outre un premier dispositif de déplacement pour le déplacement d'avant en arrière du dispositif de guidage dans une direction parallèle à un plan de roulement (R) formé par les nervures de roulement (1) ou les arêtes de roulement (2).

9. Dispositif selon l'une, quelconque des revendications précédentes, dans lequel le dispositif de guidage et le dispositif de mesure (5) sont reçus sur un chariot pouvant être déplacé parallèlement au plan de roulement (R).

10. Dispositif selon l'une quelconque des revendications précédentes, dans lequel le dispositif de guidage présente, au niveau de chacune des nervures de roulement (1), à chaque fois une roue de roulement (4) s'étendant en partie sur le plan de roulement (R).

11. Dispositif selon l'une quelconque des revendications précédentes, dans lequel un dispositif d'entraînement est réalisé et prévu pour entraîner la roue de roulement (4).

12. Dispositif selon l'une quelconque des revendications précédentes, comprenant en outre un deuxième dispositif de déplacement pour déplacer la roue de roulement (4) par rapport à un plan de roulement (R).

13. Dispositif selon l'une quelconque des revendications précédentes, comprenant en outre une commande pour commander le premier et le deuxième dispositif de déplacement de telle sorte que la tige (3) soit guidée le long d'une section de mesure prédéfinie (b) sur les arêtes de roulement (2) et soit libérée après avoir parcouru la section de mesure (b).

14. Dispositif selon l'une quelconque des revendications précédentes, dans lequel le dispositif de mesure (5) est un dispositif de mesure à touche ou sans contact.

15. Dispositif selon la revendication 14, dans lequel le dispositif de mesure est de la catégorie des montres de mesure numériques, des dispositifs de mesure de distance optiques et/ou acoustiques, et des dispositifs de mesure de distance laser.

16. Dispositif selon l'une quelconque des revendications précédentes, dans lequel avec le dispositif de mesure (5), la distance (a) entre la tige (3) et le dispositif de mesure (5) peut être mesurée de manière répétée pendant le guidage de la tige (3) le long de la section de mesure (b).

17. Dispositif selon l'une quelconque des revendications précédentes, comprenant en outre un dispositif de traitement des données pour enregistrer et/ou analyser des valeurs de mesure mesurées avec le dispositif de mesure (5) et/ou pour déterminer une grandeur décrivant la droiture de la tige (3).

18. Procédé pour mesurer au moins en partie la forme d'une tige (3) de section transversale circulaire au moyen d'un dispositif selon l'une quelconque des revendications 1 à 14, comprenant les étapes suivantes :
- roulage de la tige (3) sur au moins deux nervures de roulement (1), la tige (3) étant orientée transversalement à la direction longitudinale des nervures de roulement (1) ;
- guidage de la tige (3) le long des nervures de roulement (1) dans l'orientation prédéfinie dans un mouvement de roulement le long des nervures de roulement (1) sur une section de mesure prédéfinie au moyen d'au moins un dispositif de guidage (4) ; et
- mesure de la forme de la tige (3) pendant le déplacement de la tige (3) le long de la section de mesure, avec au moins un dispositif de mesure (5) pour mesurer la forme de la tige (3), l'au moins un dispositif de mesure (5) étant déplacé conjointement avec l'un des au moins un dispositif de guidage.
